# EUROPEAN PATENT APPLICATION

(11) **EP 3 705 354 A1**
(43) Date of publication of application: **09.09.2020**
(21) Application number: 18871948.8
(22) Date of filing: 02.11.2018
(51) Int. Cl.: B60S 5/06

(54) **BATTERY PACK STORAGE SYSTEM AND AUTOMATIC BATTERY SWAPPING STATION FOR ELECTRIC CAR**

(30) Priority: 03.11.2017 CN 201711071214
(71) Applicant: NIO Nextev Limited, Central, Hong Kong (HK)
(72) Inventor: LI, Nan, Shanghai 201804 (CN); TIAN, Xiaotao, Shanghai 201804 (CN); MA, Yongyue, Shanghai 201804 (CN); LIU, Lijing, Shanghai 201804 (CN)
(74) Representative: Vossius & Partner Patentanwälte Rechtsanwälte mbB
(86) International application number: PCT/CN2018/113668
(87) International publication number: WO 2019/085990

(57) **Abstract**

The present invention discloses a battery pack storage system for an automatic battery swap station of an electric vehicle, including: a battery pack storage device (1), having multiple layers of first battery pack storage units (4) arranged along a height direction; and a battery pack exchange device (2), located on one side of the battery pack storage device along a first direction, having a second battery pack storage unit (5) capable of moving along the height direction and being able to achieve a height for exchanging battery packs with the first battery pack storage units. The battery packs are stored in layers, and the storage orientation is consistent with the exchange orientation, therefore the battery pack storage system has the technical effects of small occupation space, large number of stored battery packs and short battery pack exchange time, has high battery replacement efficiency, and can be widely used in various occasions. The present invention further discloses an automatic battery swap station of an electric vehicle having the battery pack storage system.

## Description

### Field of the Invention

The present invention relates to the technical field of battery replacement of electric vehicles, and in particular to a battery pack storage system and an automatic battery swap station of an electric vehicle.

### Background of the Invention

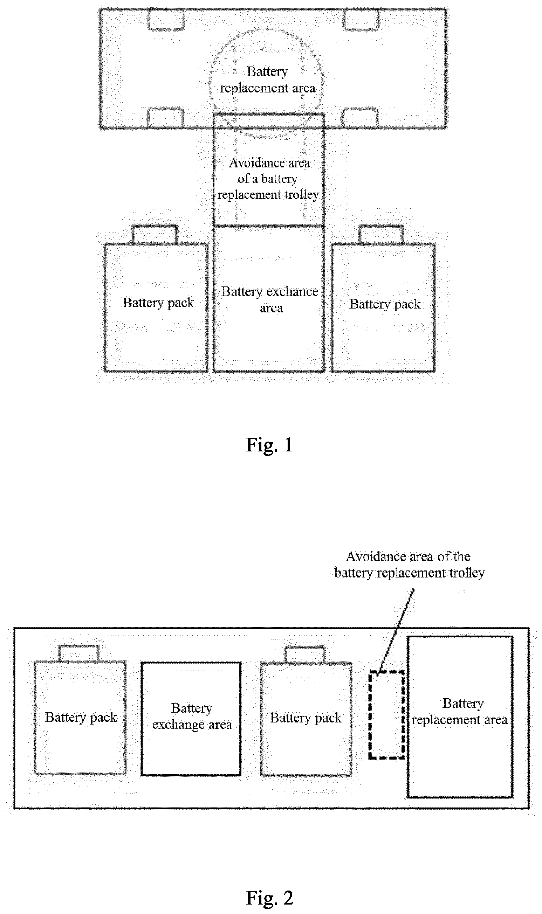

With the development of charging and battery replacement facilities of electric vehicles, more and more vehicle owners choose to use automatic battery swap stations to supplement electric energy for the electric vehicles. An automatic battery swap station designed by the applicant before the present invention is shown in Fig. 1 and Fig. 2, in the automatic battery swap station shown in Fig. 1, the difference between the orientation of a battery pack in a battery pack storage area and the orientation of the battery pack in a battery replacement area is 90 degrees, the battery pack needs to be rotated 90 degrees in the whole process, so that the cost is high, the battery replacement time is long, and the system complexity is high. In the battery replacement process, it is necessary to set an avoidance space for a battery replacement trolley, when the floor space is three parking spaces, the automatic battery swap station can store 5 battery packs at most, so that the number of stored battery packs is small. Furthermore, there is only one layer of batteries in a battery pack exchange position, and every time the battery packs are exchanged, the battery packs need to be picked up from a long distance, which takes a long time and leads to low battery replacement efficiency.

In the automatic battery swap station shown in Fig. 2, the storage orientation of the battery pack is the same as the replacement orientation in the solution, the battery pack no longer needs to be rotated 90 degrees in the battery replacement process, but it is still necessary to set the avoidance space for the battery replacement trolley, such that the space occupied by a battery replacement system exceeds the width of the three parking spaces, and there is no margin for the surrounding space. In addition, there is only one layer of battery pack exchange position, and every time the battery packs are exchanged, the battery packs need to be picked up from a long distance, which takes a long time and leads to low battery replacement efficiency. In addition, the above-mentioned automatic battery swap station usually requires the battery replacement trolley to be able to ascend and descend between the battery storage positions along the height direction of the battery replacement position, so as to place or remove the battery pack. Therefore, on one hand, a complicated lifting mechanism needs to be arranged on the battery replacement trolley to meet the lifting requirements, and on the other hand, the battery replacement time is longer, and the battery replacement efficiency is lower.

It can be seen that the existing automatic battery swap stations at least have the following shortcomings: large space occupation, small number of stored battery packs, long battery pack exchange time and low battery replacement efficiency, so that the user experience is poor.

### Summary of the Invention

The technical problem to be solved by the present invention is to provide a battery pack storage system and an automatic battery swap station of an electric vehicle. The automatic battery swap station has a small occupation space, a small number of stored battery packs, a short battery pack exchange time and high battery replacement efficiency, can be widely applicable to a variety of occasions, and greatly improves the user experience.

In order to solve the above technical problem, the present invention provides a battery pack storage system for an automatic battery swap station of an electric vehicle, including:
a battery pack storage device, having a battery pack storage area, wherein the battery pack storage area has multiple layers of first battery pack storage units arranged along a height direction;
a battery pack exchange device for exchanging a battery pack with a battery replacement trolley, wherein the battery pack exchange device is located on one side of the battery pack storage device along a first direction, the battery pack exchange device has a second battery pack storage unit and can move along the height direction to achieve a height that enables the second battery pack storage unit and the first battery pack storage unit to exchange the battery packs.

Further, the battery pack storage device is provided with an avoidance area located at the bottom of the first battery pack storage unit, and the avoidance area enables the battery replacement trolley to pass through; and
the battery pack exchange device can move to the avoidance area along the height direction to exchange the battery packs with the battery replacement trolley.

Further, at least two battery pack storage areas arranged along a second direction are provided, and the second direction is perpendicular to the first direction; and
the battery pack exchange device can move along the second direction to exchange the battery packs with the battery pack storage areas.

Further, the battery pack exchange device is provided with at least two layers of second battery pack storage units arranged along the height direction.

Further, both the first and second battery pack storage units are provided with conveying parts for supporting and conveying the battery pack, and the conveying direction of the conveying part is parallel to the first direction.

Further, the battery pack storage area includes at least three layers of the first battery pack storage units.

According to another aspect of the present invention, an automatic battery swap station of an electric vehicle is provided, including the battery pack storage system, wherein the automatic battery swap station further includes:
a battery replacement platform, arranged on one side of the battery pack storage system along the first direction for supporting and locating the vehicle and lifting the vehicle to a preset battery replacement height.

Further, the battery pack storage device is located between the battery pack exchange device and the battery replacement platform along the first direction; and
the battery pack storage device is provided with an avoidance area located at the bottom of the first battery pack storage unit, and the avoidance area enables the battery replacement trolley to pass through.

Further, the automatic battery swap station further includes: a guide rail extending along the first direction, wherein one end of the guide rail extends into the battery replacement platform, and the other end thereof extends to the battery pack exchange device; and
the battery replacement trolley, arranged on the guide rail and capable of reciprocating along the guide rail to complete the transportation and exchange of the battery packs between the vehicle and the battery pack exchange device.

Further, the battery pack exchange device further includes an upright post structure and a lifting structure, the upright post structure is fixed at both ends of the battery pack exchange device along the vehicle width direction, and the lifting structure is arranged on the upright post structure and can move up and down along the upright post structure to drive the second battery pack storage unit to move along the height direction.

Further, the automatic battery swap station further includes a charging device for charging a power-lost battery pack.

Further, the automatic battery swap station further includes a control device for sending instructions to the battery replacement platform, the battery replacement trolley, the first battery pack storage unit and the second battery pack storage unit to coordinate and control the work of the components.

Compared with the prior art, the present invention has obvious advantages and beneficial effects. By means of the above technical solutions, the battery pack storage system and the automatic battery swap station of electric vehicle in the present invention can achieve considerable technological advancement and practicality, have wide industrial use values, and at least have the following advantages:
(1) the storage orientation of the battery pack is the same as the replacement orientation of the battery pack, so the battery pack does not need to be rotated in the battery replacement process, thereby shortening the battery replacement time and reducing the battery replacement space;
(2) the battery replacement trolley can be placed in the battery pack storage area, so no additional avoidance position of the battery replacement trolley needs to be set, thereby further saving the space;
(3) the battery pack storage devices are arranged in layers and columns, so multiple battery packs can be stored, and the number of stored battery packs is increased; and
(4) the battery pack exchange device has two layers of battery pack exchange positions, every time the battery packs are exchanged, one layer is a fully-charged battery pack, and one layer is an idle turnover position, thereby shortening the exchange time of the battery pack.
(5) The battery swap station is suitable for the requirements of various parking lots and most vehicle repair stations, and can be widely used in various occasions.
(6) All processes of automatic battery replacement can be completed automatically by the control device, and no manual battery replacement is needed, thereby saving manpower, ensuring a simple battery replacement process and easy operation, improving the battery replacement efficiency and improving the user experience.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a schematic diagram of a layout of an automatic battery swap station of an electric vehicle in the prior art;
Fig. 2 is a schematic diagram of a layout of another automatic battery swap station of an electric vehicle in the prior art.
Fig. 3 is a schematic diagram of a battery pack storage system provided by an embodiment of the present invention;
Fig. 4 is a schematic diagram of a layout of an automatic battery swap station of an electric vehicle provided by an embodiment of the present invention;
Fig. 5 is a schematic diagram of a main body frame of an automatic battery swap station of an electric vehicle provided by an embodiment of the present invention;
Fig. 6 is a top view of an automatic battery swap station of an electric vehicle provided by an embodiment of the present invention;
Fig. 7 is a stereogram of an automatic battery swap station of an electric vehicle provided by an embodiment of the present invention;
Fig. 8 is a flow diagram of an automatic battery replacement method of an electric vehicle provided by an embodiment of the present invention.

**Main Reference Signs:**

| | | |
|---|---|---|
| 1- battery pack storage device | 2-battery pack exchange device | 3-battery pack storage area |
| 4- first battery pack storage unit | 5-second battery pack storage unit | 6-avoidance area |
| 7-battery replacement trolley | 8-battery replacement platform | 9-guide rail |
| 10-charging device | 11-control device | |

### Detailed Description of the Embodiments

In order to further illustrate the technical means and effects adopted in the present invention to achieve the intended purpose of the invention, specific embodiments and effects of an battery pack storage system of an electric vehicle and an automatic battery swap station of the electric vehicle proposed in accordance with the present invention are described in detail below, in conjunction with the drawings and preferred embodiments.

### Embodiment 1

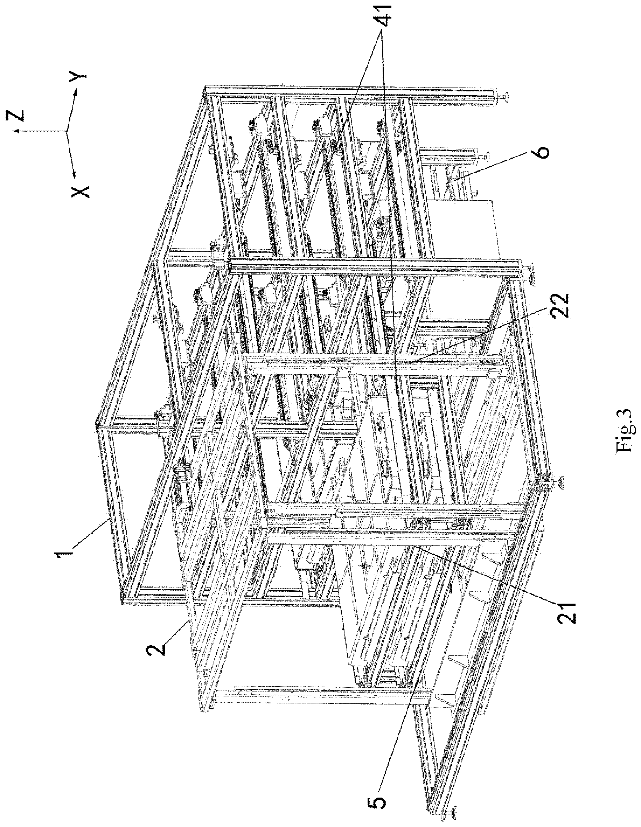

As shown in Fig. 3, the embodiment of the present invention provides a battery pack storage system for an automatic battery swap station of an electric vehicle, including: a battery pack storage device 1 for storing battery packs and a battery pack exchange device 2 for exchanging and conveying battery packs between the battery pack storage device 1 and a battery replacement trolley. The battery pack storage device 1 has a battery pack storage area 3, and the battery pack storage area 3 has multiple layers of first battery pack storage units 4 arranged along the height direction Z; and the battery pack exchange device 2 is located on one side of the battery pack storage device 1 along a first direction X, the battery pack exchange device 2 has a second battery pack storage unit 5 and can move along the height direction Z to achieve a height that enables the second battery pack storage unit 5 and the first battery pack storage unit 4 to exchange the battery packs. It can be understood that the height direction Z is a direction perpendicular to the ground, and the first direction X is parallel to the horizontal plane, and generally can be selected to be consistent with the vehicle width direction.

It should be noted that the battery packs in the present invention include a power-lost battery pack and a fully-charged battery pack. The power-lost battery pack refers to a battery pack detached from the vehicle in a battery replacement process, and it is not limited that the battery pack detached from the vehicle is in a complete power-lost state. Similarly, the fully-charged battery pack refers to a battery pack installed on the vehicle in the battery replacement process, and it is not limited that the battery pack installed in the vehicle is in a complete fully-charged state.

The electric vehicle in the present invention generally refers to a vehicle with a replaceable battery pack, and is not limited to pure electric vehicles, but can also be hybrid vehicles.

Various components of the battery pack storage system are respectively described in detail below:

### (1) Battery pack storage device

The battery pack storage device 1 is provided with an avoidance area 6 located at the bottom of the first battery pack storage unit 4, and the avoidance area 6 enables the battery replacement trolley 7 to pass through; and the battery pack exchange device 2 can move to the avoidance area 6 along the height direction Z to exchange the battery pack with the battery replacement trolley 7.

The overall structure of the battery pack storage device 1 may adopt a frame structure, at least two battery pack storage areas 3 arranged along a second direction Y are provided, the second direction Y is perpendicular to the first direction X, is parallel to the horizontal plane and generally can be selected to be consistent with the vehicle length direction. The battery pack storage area 3 includes multiple layers of first battery pack storage units 4 arranged along the height direction Z, for example, at least three layers. Each first battery pack storage unit 4 can store one battery pack. As shown in Fig. 3, as an example, the battery pack storage device 1 has two battery pack storage areas 3 arranged along the second direction Y, and each battery pack storage area 3 includes three layers of first battery pack storage units 4. The battery pack storage device 1 adopts a multilayer structure, which can not only increase the number of stored battery packs, but also saves the floor space.

The first battery pack storage unit 4 is provided with a conveying part 41 for supporting and conveying the battery pack so as to convey the battery pack, and the conveying direction of the conveying part 41 is parallel to the first direction X. The conveying part 41 can be a conveyor belt, an in-line roller seat, or the like.

### (2) Battery pack exchange device

In the example shown in Fig. 3, when the battery pack storage device 1 includes two battery pack storage areas 3 arranged along the second direction Y, the battery pack exchange device 2 can move along the second direction Y to exchange the battery packs with the battery pack storage areas 3. For example, a track can be provided, the battery pack exchange device 2 moves along the second direction Y through the track, so that the battery pack exchange device 2 can move to any battery pack storage area 3 and exchange the battery pack with the first battery pack storage unit 4 by ascending and descending along the height direction Z.

The battery pack exchange device 2 is provided with at least two layers of second battery pack storage units 5 arranged along the height direction Z, and each second battery pack storage unit 5 can store one battery pack. In the battery replacement process, at least one layer of second battery pack storage units 5 is in an idle state for receiving power-lost battery pack on the battery replacement trolley 7; and fully-charged battery pack are stored on at least one layer of second battery pack storage units 5 for providing fully-charged battery pack for the battery replacement trolley 7. in the example shown in Fig. 3, the battery pack exchange device 2 is provided with two layers of second battery pack storage units 5 arranged along the height direction Z.

The battery pack exchange device 2 further includes an upright post structure 21 and a lifting structure 22, the upright post structure 21 is fixed at both ends of the battery pack exchange device 2 along the first direction X, and the lifting structure 22 is arranged on the upright post structure 21 and can move up and down along the upright post structure 21 to drive the second battery pack storage unit 5 to move up and down along the height direction Z. Thereby, the battery pack exchange with the battery pack storage device 1 and with the battery replacement trolley 7 is realized. However, it should be understood that the above upright post structure 21 and the lifting structure 22 are only an example, and the specific structure can be adjusted adaptively, as long as the battery pack exchange device 2 can ascend and descend along the height direction Z.

In order to reduce the friction between the second battery pack storage unit 5 and the battery pack during the conveying process of the battery pack, the second battery pack storage unit 5 is also provided with the conveying part 41 for supporting and conveying the battery pack.

Through the ascending and descending of the battery pack exchange device 2 and the movement along the second direction Y, the exchange of the battery pack with the battery pack storage device 1 is realized, so that the implementation mode is simple, and the complexity is low. When the height of the avoidance area 6 is set to enable the battery replacement trolley 7 to maintain the height required for battery exchange with the vehicle in the avoidance area 6, the battery replacement trolley 7 does not need to be provided with a complex lifting mechanism to exchange the battery packs, thereby reducing the cost and shortening the battery exchange time. In addition, the exchange of the battery packs between the battery pack exchange device 2 and the battery pack storage device 1 can be completed during the battery replacement operation of the battery replacement trolley 7 and the vehicle and can also be completed within an intermittent time, so that the battery replacement time is short, and the battery replacement efficiency is high.

### Embodiment 2

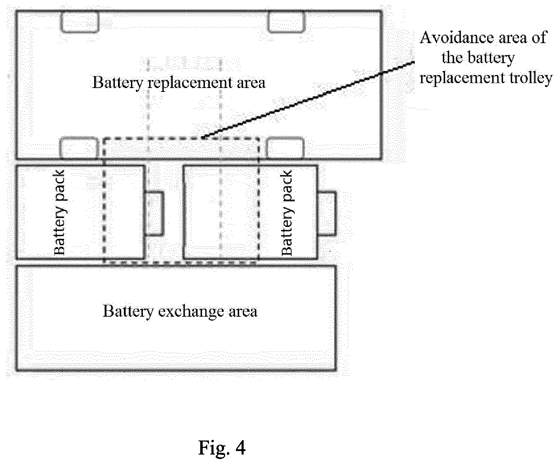

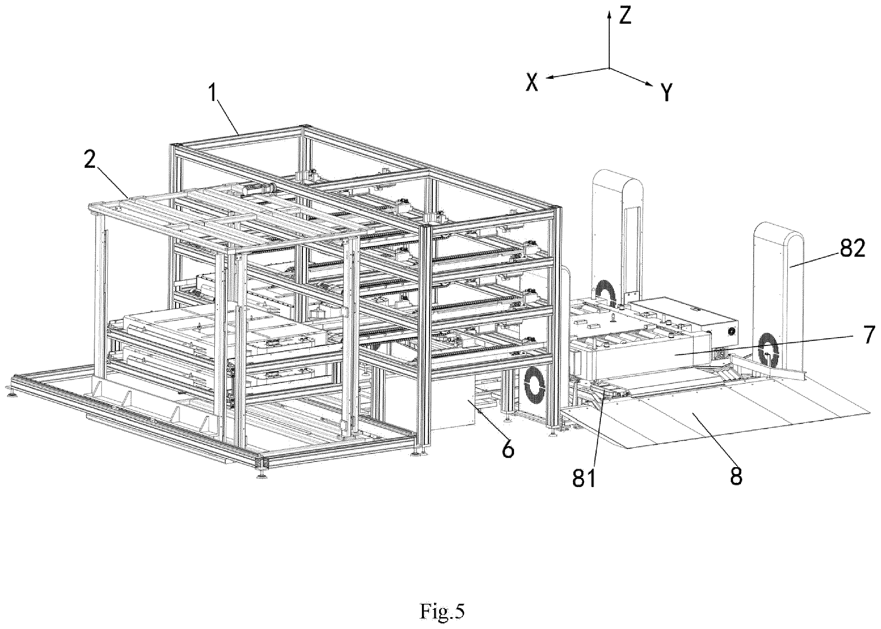

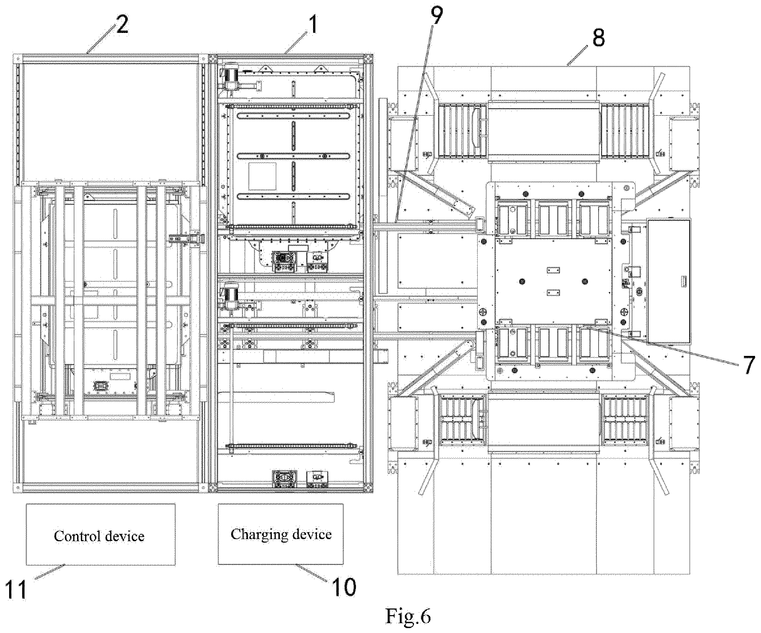

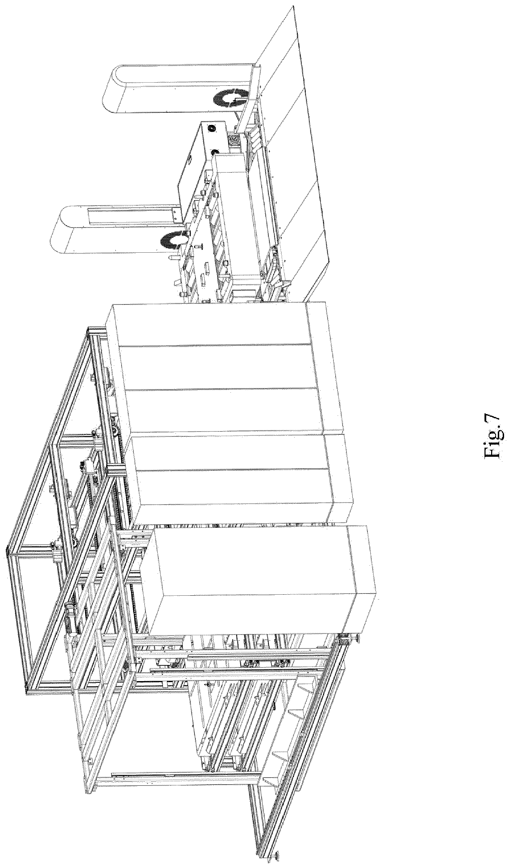

As shown in Fig. 4 to Fig. 7, the embodiment of the present invention provides an automatic battery swap station of an electric vehicle, including the battery pack storage system in embodiment 1, wherein the automatic battery swap station further includes: the battery replacement trolley 7, a battery replacement platform 8 and a guide rail 9. The battery replacement platform 8 is arranged on one side of the battery pack storage system along the first direction X for supporting and locating the vehicle and lifting the vehicle to a preset battery replacement height. The guide rail 9 extends along the first direction X, one end of the guide rail 9 extends into the battery replacement platform 8, and the other end thereof extends to the battery pack exchange device 2; and the battery replacement trolley 7 is arranged on the guide rail 9 and is capable of reciprocating along the guide rail 9 to complete the transportation and exchange of the battery packs between the vehicle and the battery pack exchange device 2.

In the example shown in Fig. 4 to Fig. 7, the battery pack storage device 1 is located between the battery pack exchange device 2 and the battery replacement platform 8 along the first direction X; the battery pack storage device 1 is provided with an avoidance area 6 located at the bottom of the first battery pack storage unit 4, and the avoidance area 6 enables the battery replacement trolley 7 to pass through, thus, the automatic battery replacement platform does not need to be provided with an additional avoidance area of the battery replacement trolley 7, in this way, the floor space is saved, and the layout of the automatic battery swap station is more compact and reasonable.

In the example shown in Fig. 4, the height of the avoidance area 6 is configured to enable the battery replacement trolley 7 to maintain the height required for battery exchange with the vehicle in the avoidance area 6, so that when the battery replacement trolley 7 performs battery replacement with the vehicle, the battery replacement trolley 7 only translates along the guide rail 9 without ascending or descending, thereby improving the battery replacement efficiency. However, it can be understood that the avoidance area 6 can also be set to be lower than the height required for battery exchange with the vehicle, but after the battery replacement trolley 7 exits from the avoidance area 6, it needs to ascends to the height required for battery exchange with the vehicle, when the battery replacement trolley 7 needs to enter the avoidance area 6, it descends to a height lower than the avoidance area 6, it can be understood that when the avoidance area 6 is set to be lower than the height required for battery exchange with the vehicle, a lifting structure capable of moving along the height direction Z needs to be arranged on the battery replacement trolley 7. In the example shown in Fig. 4 to Fig. 7, the first direction X is the vehicle width direction, and the second direction Y is the vehicle length direction.

In order to reduce the friction between the battery replacement trolley 7 and the battery pack during the conveying process of the battery pack, the battery replacement trolley 7 is also provided with the conveying part 41 for supporting and conveying the battery pack.

As shown in Fig. 4, as an example, the battery replacement platform 8 includes a platform main body 81 and a lifting mechanism 82, wherein the platform main body 81 is used for supporting and locating the vehicle, the lifting mechanism 82 is arranged on the platform main body 81 for lifting the vehicle to the height required for battery replacement with the battery replacement trolley 4, and the required height can be set according to factors such as the type of vehicle to be replaced. It should be understood that when the vehicle enters and exits the battery replacement platform 8, the battery replacement trolley 4 should avoid.

The automatic battery swap station further includes a charging device 10 for charging power-lost battery pack. The charging device 10 can be provided separately and can also be arranged in the battery storage device 1.

The automatic battery swap station further includes a control device 11 for sending instructions to the battery replacement platform 8, the battery replacement trolley 7, the battery pack storage device 1 and the battery pack exchange device 2 to coordinate and control the work of various components. The control device 11 can control various components of the battery swap station through wired, wireless or remote control modes. The control device 11 can also be separately arranged in the battery swap station or on the component parts of the battery swap station, for example, in the battery replacement platform 8, and the control device 11 can include an electrical control cabinet and a power distribution cabinet.

By using the composition and layout of the battery swap station in the above examples, the automatic battery swap station can be controlled to occupy the area of three parking spaces at most, therefore the layout is compact and reasonable.

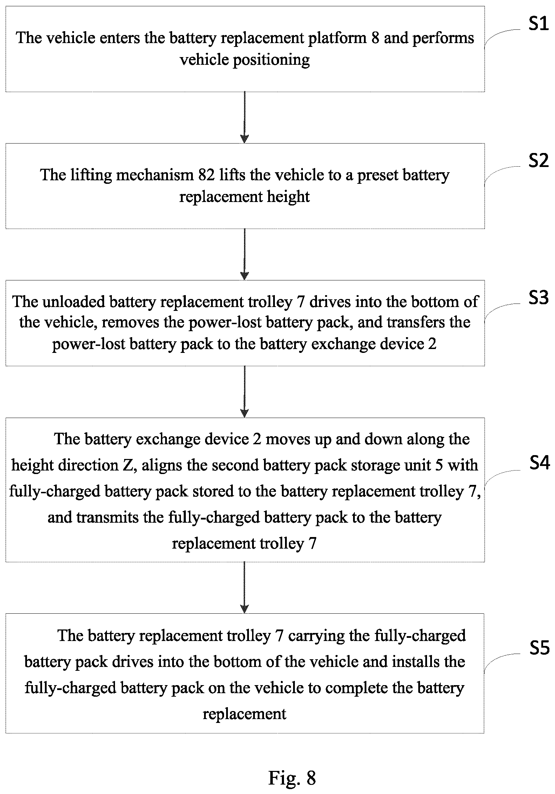

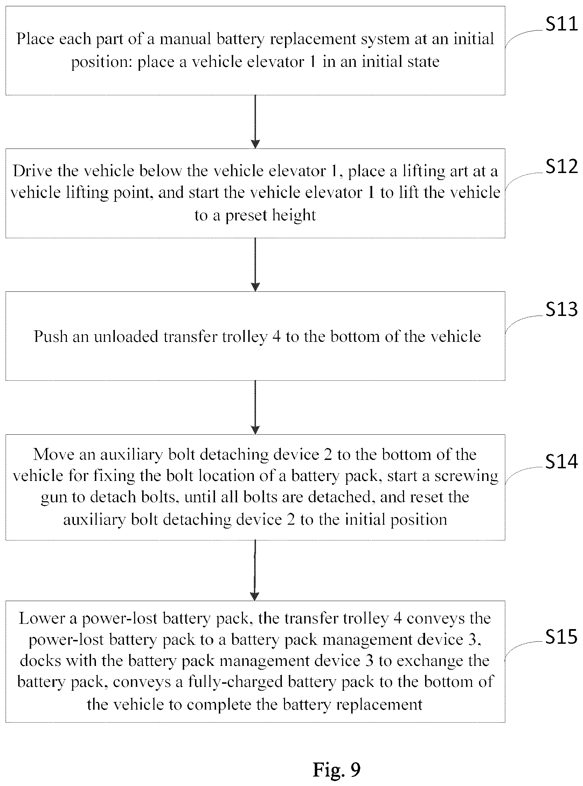

Based on the above automatic battery swap station, as shown in Fig. 8, when automatic battery replacement is implemented, the operation method includes the following steps:
Step S1, the vehicle enters the battery replacement platform 8 and performs vehicle positioning; and
   during the driving of the vehicle, the battery replacement trolley 7 drives into the avoidance area 6 of the battery pack storage device 1 through the guide rail 9 to evade.
Step S2, the lifting mechanism 82 lifts the vehicle to a preset battery replacement height;
step S3, the unloaded battery replacement trolley 7 drives into the bottom of the vehicle, removes the power-lost battery pack, and transfers the power-lost battery pack to the battery exchange device 2;
step S4, the battery exchange device 2 moves up and down along the height direction Z, aligns the second battery pack storage unit 5 with fully-charged battery pack stored to the battery replacement trolley 7, and transmits the fully-charged battery pack to the battery replacement trolley 7; and
step S5, the battery replacement trolley 7 carrying the fully-charged battery pack drives into the bottom of the vehicle and installs the fully-charged battery pack on the vehicle to complete the battery replacement.

During the execution of step S5, or after the execution of step S5, the battery pack exchange device 2 can move up and down along the height direction Z, or move along the second direction Y to align the first battery pack storage unit 4 so as to transfer to the power-lost battery pack to the first battery pack storage unit 4, or, to obtain the fully-charged battery pack from the first battery pack storage unit 4 for use in the next battery replacement process.

In the battery pack storage system and the automatic battery swap station of the electric vehicle provided by the embodiments of the present invention, the storage orientation of the battery pack is the same as the replacement orientation of the battery pack, so the battery pack does not need to be rotated in the battery replacement process, thereby shortening the battery replacement time and reducing the battery replacement space; the battery replacement trolley 7 can be placed in the battery pack storage area, so no additional avoidance position of the battery replacement trolley 7 needs to be set, thereby further saving the space; the battery pack storage devices 1 are arranged in layers and columns, so multiple battery packs can be stored, and the number of stored battery packs is increased; and the battery pack exchange device 2 has two layers of battery pack exchange positions, every time the battery packs are exchanged, one layer is a fully-charged battery pack, and one layer is an idle turnover position, thereby shortening the exchange time of the battery pack. In addition, the battery swap station is suitable for the requirements of various parking lots and most vehicle repair stations, and can be widely used in various occasions. All processes of the automatic battery replacement method in the present invention can be completed automatically by the control device, and no manual battery replacement is needed, thereby saving manpower, ensuring a simple battery replacement process and easy operation, improving the battery replacement efficiency and improving the user experience.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. A battery pack storage system for an automatic battery swap station of an electric vehicle, comprising:
a battery pack storage device, having a battery pack storage area, wherein the battery pack storage area has multiple layers of first battery pack storage units arranged along a height direction;
a battery pack exchange device for exchanging a battery pack with a battery replacement trolley, wherein the battery pack exchange device is located on one side of the battery pack storage device along a first direction, the battery pack exchange device has a second battery pack storage unit and can move along the height direction to achieve a height that enables the second battery pack storage unit and the first battery pack storage unit to exchange the battery packs.

2. The battery pack storage system according to claim 1, wherein,
the battery pack storage device is provided with an avoidance area located at the bottom of the first battery pack storage unit, and the avoidance area enables the battery replacement trolley to pass through; and
the battery pack exchange device can move to the avoidance area along the height direction to exchange the battery pack with the battery replacement trolley.

3. The battery pack storage system according to claim 1 or 2, wherein,
at least two battery pack storage areas arranged along a second direction are provided, and the second direction is perpendicular to the first direction; and
the battery pack exchange device can move along the second direction to exchange the battery packs with the battery pack storage areas.

4. The battery pack storage system according to claim 1 or 2, wherein,
the battery pack exchange device is provided with at least two layers of second battery pack storage units arranged along the height direction.

5. The battery pack storage system according to claim 1 or 2, wherein,
both the first and second battery pack storage units are provided with conveying parts for supporting and conveying the battery pack, and the conveying direction of the conveying part is parallel to the first direction.

6. The battery pack storage system according to claim 1 or 2, wherein,
the battery pack storage area comprises at least three layers of the first battery pack storage units.

7. An automatic battery swap station of an electric vehicle, comprising the battery pack storage system according to any one of claims 1-6, wherein the automatic battery swap station further comprises:
a battery replacement platform, arranged on one side of the battery pack storage system along the first direction for supporting and locating the vehicle and lifting the vehicle to a preset battery replacement height.

8. The automatic battery swap station according to claim 7, wherein,
the battery pack storage device is located between the battery pack exchange device and the battery replacement platform along the first direction; and
the battery pack storage device is provided with an avoidance area located at the bottom of the first battery pack storage unit, and the avoidance area enables the battery replacement trolley to pass through.

9. The automatic battery swap station according to claim 7, further comprising:
a guide rail extending along the first direction, wherein one end of the guide rail extends into the battery replacement platform, and the other end thereof extends to the battery pack exchange device; and
the battery replacement trolley, arranged on the guide rail and capable of reciprocating along the guide rail to complete the transportation and exchange of the battery packs between the vehicle and the battery pack exchange device.

10. The automatic battery swap station according to claim 7, wherein:
the battery pack exchange device further comprises an upright post structure and a lifting structure, the upright post structure is fixed at both ends of the battery pack exchange device along the vehicle width direction, and the lifting structure is arranged on the upright post structure and can move up and down along the upright post structure to drive the second battery pack storage unit to move along the height direction.

11. The automatic battery swap station according to claim 7, wherein:
the automatic battery swap station further comprises a charging device for charging a power-lost battery pack.

12. The automatic battery swap station according to any one of claims 7-11, wherein:
the automatic battery swap station further comprises a control device for sending instructions to the battery replacement platform, the battery replacement trolley, the first battery pack storage unit and the second battery pack storage unit to coordinate and control the work of the components.
